# EUROPEAN PATENT SPECIFICATION

(11) **EP 1 814 267 B1**
(45) Date of publication and mention of the grant of the patent: **20.06.2012**
(21) Application number: 04799623.6
(22) Date of filing: 11.11.2004
(51) Int. Cl.: H04L 29/06, H04L 12/66, H04L 12/28

(54) **IP PACKET RELAY METHOD AND GATEWAY DEVICE IN COMMUNICATION NETWORK**
IP-PAKETRELAISVERFAHREN UND GATEWAY-EINRICHTUNG IN EINEM KOMMUNIKATIONSNETZ
PROCEDE DE RELAIS DE PAQUETS IP ET DISPOSITIF DE PASSERELLE DANS UN RESEAU DE COMMUNICATION

(43) Date of publication of application: 01.08.2007
(73) Proprietor: MITSUBISHI ELECTRIC CORPORATION, Chiyoda-ku Tokyo 100-8310 (JP)
(72) Inventor: FURUYA, Shinji, Mitsubishi Denki Kabushiki Kaisha, Tokyo 1008310 (JP); YOKOTANI, Tetsuya, Mitsubishi Denki Kabushiki K., Tokyo 1008310 (JP); SATO, Kouji, Mitsubishi Denki Kabushiki Kaisha, Tokyo 1008310 (JP); KASHIMA, Kazuyuki, Mitsubishi Denki Kabushiki K., Tokyo 1008310 (JP)
(74) Representative: Pfenning, Meinig & Partner GbR
(86) International application number: PCT/JP2004/016762
(87) International publication number: WO 2006/051594

(56) References cited:
- WO-A-02/098119
- JP-A- 2003 289 337
- JP-A- 2004 522 368
- US-A1- 2003 235 187
- CAMARILLO G ET AL: "Integration of Resource Management and Session Initiation Protocol (SIP); rfc3312.txt" IETF STANDARD, INTERNET ENGINEERING TASK FORCE, IETF, CH, 1 October 2002 (2002-10-01), XP015009089 ISSN: 0000-0003
- SCHULZRINNE COLUMBIA UNIVERSITY S CASNER PACKET DESIGN H: "RTP Profile for Audio and Video Conferences with Minimal Control; rfc3551.txt" IETF STANDARD, INTERNET ENGINEERING TASK FORCE, IETF, CH, 1 July 2003 (2003-07-01), XP015009333 ISSN: 0000-0003
- LENNOX H SCHULZRINNE COLUMBIA U J ROSENBERG DYNAMICSOFT J: "Common Gateway Interface for SIP; rfc3050.txt" IETF STANDARD, INTERNET ENGINEERING TASK FORCE, IETF, CH, 1 January 2001 (2001-01-01), XP015008833 ISSN: 0000-0003

## Description

### TECHNICAL FIELD

The present invention relates to an IP-packet relay method in a communication network including an IP (Internet protocol) network, a call control network based on the IP network, and a gateway that connects the networks, and the gateway.

### BACKGROUND ART

The prior art document WO 02/098119 A2 describes a system for providing telephone service over a packet-based network which comprises in combination: a call director operable to receive a call request over a packet-based network and to determine whether the call request is authorized; and a call handler operable to translate the call request from a none-native protocol to a native protocol, wherein the native protocol is associated with a gateway to a PSTN network.
Various definitions are presented for functions or apparatuses called gateway. Examples with similar status as the gateway include ATM (Asynchronous Transfer Mode) communication apparatuses such as an ATM router capable of accommodating Ethernet (registered trademark) and an ATM-LAN switch. Besides, there are gateways such as an MGCP (Media Gateway Control Protocol: IETF RFC3435) gateway or an SIP (Session Initiation Protocol: IETF RFC3261) gateway, which are currently often applied to connect IP networks to existing analog telephones, PSTN (Public Switched Telephone Network) and PBX (Private Branch Exchange) or the like. In addition, H.323 (ITU-T Recommendation H.323) has been used as a call control protocol for realizing multimedia. These gateways or apparatuses corresponding to the gateway are used for protocol conversion or media conversion in a network configuration described below.

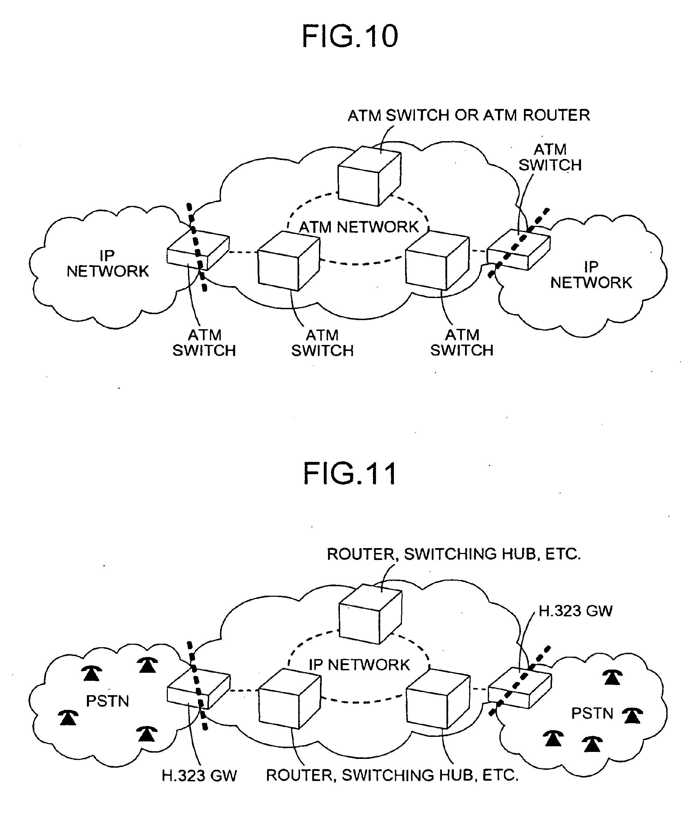

Fig. 10 is an example in which an ATM switch or an ATM router is used as a gateway between an IP network based on the existing Ethernet (registered trademark) and an ATM network. Generally, the ATM router operates as follows:
1. When a packet is input from the Ethernet (registered trademark), the ATM router specifies an ATM connection, to which the packet is to be transmitted, by searching for a destination MAC address thereof, and encapsulates the input packet in an AAL packet to transfer the AAL packet to the connection.
2. When a packet is input from the ATM network, the similar operation is performed. That is, the ATM router specifies an Ethernet (registered trademark) port, to which the packet is to be transmitted, from the destination MAC address, and transfers the packet to the Ethernet (registered trademark).
The ATM router functions as a gateway that relays between the Ethernet (registered trademark) and an ATM network using a different network system, referred to as connection-oriented ATM.

Fig. 11 is a schematic of a general connection configuration by an H.323 gateway between PSTN (Public Switched Telephone Network) and an IP network. The H.323 gateway performs protocol conversion between a signaling protocol in which an electric signal in the analog telephone is directly used and H.323 on the existing IP network. Basic procedures performed by the H.323 gateway are as follows:
1. H.323 GW receives an off-hook signal indicating that a receiver has been picked up.
2. When a telephone number is input, the H.323 GW analyzes the telephone number to perform H.225.0Q.931 call setting between the H.323 GW and an opposite H.323 GW corresponding to the telephone number.
3. H.245 logical channel is set.
4. In a UDP session, an RTP (Real-time Protocol) speech signal is transferred.
That is, the H.323 GW receives a signal output from an analog telephone, translates the signal to the H.323 protocol to establish a UDP/IP session for exchanging speech data with the opposite H.323 gateway, and starts exchange (communication) of speech data. A TCP/IP session is established for the control to establish the UDP/IP session for exchanging speech data, in which Q.931 and H.245 are exchanged. Consequently, the H.323 gateway links a connection-oriented terminal such as an analog telephone, which is not even a virtual line, to a connectionless communication system.

In Patent Document 1, a gateway that performs protocol conversion between H.323 and SIP has been proposed. The gateway in the Patent Document 1 has an SIP agent alias table for storing H.323 alias relative to at least one SIP agent, and performs signaling conversion between at least one H.323 client end point and at least one SIP agent.

Further, a network that realizes call control and call management in an IP-WAN service provided by a carrier in the IP network by using a call control protocol in the IP network such as the SIP, which is a protocol developed for IP phones, has been expected to be popularized in recent years. Further, the realization of call control and call management will realize QoS such as network resource management and service quality management for each call. Even in the IP network that is globally widespread as an infrastructure of the Internet, the connection-oriented services are being started. There is MPLS (Multi-protocol Label Switching) that has already been used as a candidate thereof and is becoming popular.

Patent Document 1: Japanese Patent Application Laid-open No. 2001-358778

### DISCLOSURE OF INVENTION

### PROBLEM TO BE SOLVED BY THE INVENTION

As is obvious from the history to date, the development of the fields of WANs and LANs are different. Basically,
the WAN band is narrow and expensive, and
the LAN band is thick and inexpensive.
Therefore, strict band control is not always necessary in LANs. If a system capable of realizing strict band control can be available at a low price, such a system can become popular. On the other hand, if a killer application in business, which makes such a system essential, is developed, there is a great possibility of popularization for the system, even if it is more or less expensive. If there is no such situation, there is a high possibility that the wide and inexpensive LAN band is selected.

On the other hand, there is a high possibility that even if call control is realized in the WAN to provide QoS in the IP network, user terminals to be connected thereto may be left as they are.
This is because, although call control is necessary when the user terminal is connected to the WAN, the existing method is likely to be used for the communication within the LAN, which occupies a greater part of communications.

Therefore, a converter such as the gateway that relays between the existing IP communication and the call control IP network is required. The most different point of the gateway from the conventional gateway is that an attention point to which the gateway is to be applied is only a connection point between an IP network and an IP network, and communication is possible even if the IP networks are directly connected, except of a security problem or the like. In the case of the ATM router and the H.323 gateway in the conventional technique, if there is no such gateway, communication is not possible. That is, a gateway function/apparatus with a strictly different status from the conventional gateways becomes necessary.

Conventionally, there has not been any such a function and apparatus having such a status, which enables relay of the existing IP communication protocol to the IP network according to the normal procedure of call control.

An access router mostly used for the current Internet connection service also connects existing IP networks (LAN and WAN) with each other. Therefore, it looks like the same as the gateway according to the present invention. However, the IP network in the WAN is the "existing" IP network, and does not perform call control and call management. That is, the gateway function or apparatus according to the present invention is positioned between the conventional gateway and the access router.

The present invention has been achieved to solve the above problems. It is an object of the present invention to provide an IP-packet relay method and a gateway in a communication network, which can apply existing IP communications to a call control network efficiently, and can reliably manage the call control network as a call control target.

### MEANS FOR SOLVING PROBLEM

To overcome the problem and achieve the object mentioned above, the present invention provides the following: An internet protocol (IP)-packet relay method applied to a communication network including a plurality of first IP networks that accommodates IP terminals, a second IP network that is located among the first IP networks and performs call control and call management, and a gateway that connects the first IP networks to the second IP network, the IP-packet relay method comprising, in the gateway:
receiving a TCP session request packet from one of the first IP networks or a data packet that is initially transmitted;
analyzing the received packet; and
establishing a call corresponding to the received packet in the second IP network to allow an IP packet from the one of the first IP networks to another one of the first IP networks to pass through the second IP network, characterized in that:
   the plurality of first IP networks do not perform call control;
   the gateway includes a first gateway connected to the one of the first IP networks that accommodates a source IP terminal, and a second gateway connected to the another one of the first IP networks that accommodates a destination IP terminal; and
   the IP-packet relay method further comprises establishing the call in the second IP network simultaneously with establishment of a TCP session between the source IP terminal and the destination IP terminal by:
   the first gateway receiving a TCP session request packet from the source IP terminal;
   the first gateway creating a call-connection request packet to issue the call-connection request packet and transferring the received TCP session request packet;
   the second gateway transferring, upon receiving the TCP session request packet, the TCP session request packet to the destination IP terminal as it is;
   the second gateway transferring, upon receiving a TCP session response packet from the destination IP terminal, the TCP session response packet as it is;
   the second gateway issuing, upon receiving the call-connection request packet, a call-connection response packet to the source IP terminal;
   the first gateway receiving the TCP session response packet and the call-connection response packet;
   the first gateway synchronizing the TCP session response packet and the call-connection response packet;
   the first gateway transferring the TCP session response packet to the source IP terminal after having achieved synchronization between the TCP session response packet and the call-connection response packet; and
the source IP terminal transmitting, upon receipt of the TCP session response packet, a TCP-ACK packet to the destination IP terminal in order to perform, in the established TCP session, communication between the source IP terminal and the destination IP terminal after transmission of the TCP-ACK packet; wherein the first gateway achieves, as a sender, synchronization between request and response autonomously, while separately transferring the call control packet as the call-connection request packet and the TCP session-establishing packet as the TCP session request packet in the second IP network.

### EFFECT OF THE INVENTION

According to the present invention, the gateway positioned between a conventionally recognized gateway and an access router is arranged at a connection point between an existing IP network and a call control network. The gateway monitors passage of TCP and UDP, which are the most common transfer protocols in IP communication, accumulates the result therein, and establishes a necessary call according to the call control procedure to transfer a packet. Thus, in the case of applying the existing IP communication to the call control network, the call control network as the call control target can be reliably managed.

### BRIEF DESCRIPTION OF DRAWINGS

[Fig. 1] Fig. 1 is a schematic of the most basic network configuration according to the present invention.
[Fig. 2] Fig. 2 is an example of an internal configuration of a gateway.
[Fig. 3] Fig. 3 is a sequence diagram of an example of TCP communication.
[Fig. 4] Fig. 4 is an example of a TCP packet embedded in an INVITE message.
[Fig. 5] Fig. 5 is a sequence diagram of another example of TCP communication.
[Fig. 6] Fig. 6 is a sequence diagram of an example of UDP communication.
[Fig. 7] Fig. 7 is a schematic of an internal configuration of a gateway for existing IP communication with QoS.
[Fig. 8] Fig. 8 is a schematic of a configuration of a call control network for the existing IP communication with QoS.
[Fig. 9] Fig. 9 is a sequence diagram of a procedure in which an RTSP data session is applied to the call control network.
[Fig. 10] Fig. 10 is a schematic of a general connection configuration between ATM-LAN and WAN.
[Fig. 11] Fig. 11 is a schematic of a general connection configuration by an H.323 gateway between PSTN and an IP network.

### EXPLANATIONS OF LETTERS OR NUMERALS

- 11, 12: Gateway (GW apparatus)
- 20: LAN port
- 21: WAN port
- 22: Filtering unit
- 23: Routing unit
- 24: TCP/UDP unit
- 25: Application unit
- 26: SIP-adaptation unit
- 27: QoS table
- 101, 102: User network
- 201: Core network (Call control network)
- 301,: 302, 303 Core network node
- 401: Proxy server
- 501: QoS server
- 901, 902: IP terminal

### BEST MODE(S) FOR CARRYING OUT THE INVENTION

Exemplary embodiments of an IP-packet relay method in a communication network and a gateway according to the present invention are explained below in detail with reference to the accompanying drawings. The present invention is not limited to the embodiments.

### First embodiment

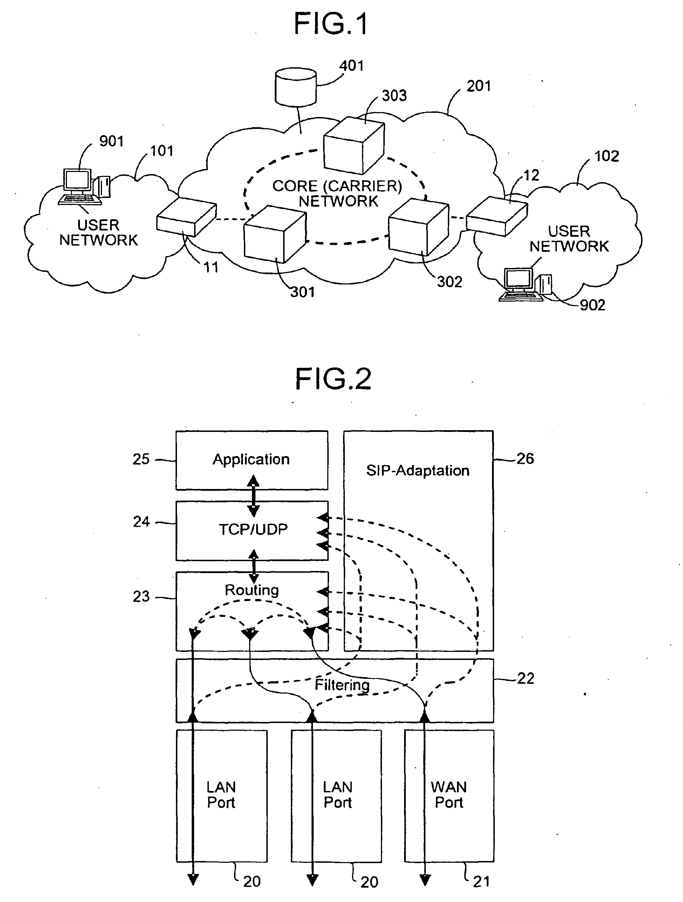

A first embodiment which does not describe the invention but aspects thereof and aspects being useful to understand the invention is explained taking as an example SIP (Session initiation protocol) which may be widely applied as a call control protocol in an IP network in the future. Fig. 1 is a schematic of a basic network configuration according to the first embodiment. In the network configuration in Fig. 1, gateways (hereinafter, GW apparatuses) 11 and 12 having a function of the present invention are realized by IP routers. The GW apparatus can be configured by a layer 2 bridge, of course.

In Fig. 1, user networks 101 and 102 are existing IP networks, and do not perform call control. A core network 201 performs call control and call management, and includes core network nodes 301, 302, and 303. An SIP server 401 is connected to the core network 201, and is implemented with an SIP proxy server as a basic function. Reference numerals 901 and 902 denote existing IP terminals or servers in the user network 101, and can be a client or a server such as telnet, ftp, or tftp.

Fig. 2 is an example of an internal functional configuration of the GW apparatuses 11 and 12. The GW apparatus shown in Fig. 2 includes two LAN ports 20, one WAN port 21, a filtering unit 22, a routing unit 23, a TCP/UDP unit 24, an application unit 25, and an SIP-adaptation unit 26. In Fig. 2, all arrows are bidirectional except for arrows passing through the SIP-adaptation unit 26.

The LAN port 20 is a port for connecting to the LAN, and a MAC (Media Access Control) layer is included therein in Fig. 2. The WAN port 21 is for connecting to the WAN, and the MAC (Media Access Control) layer is included therein in Fig. 2.

The filtering unit 22 detects an IP packet (first packet of UDP or TCP-SYN or TCP-SYN-ACK packet) being a foothold for characteristic processing of the GW and distributes the packet to the routing unit 23 or the SIP-adaptation unit 26 based on the detection result.

The routing unit 23 is a functional block for routing the IP packet, and searches a routing table based on a destination IP address of each packet to transfer the packet to an appropriate port or an upper functional block in the GW according to the result. Generally, an OS (operating system) such as LINUX performs the function thereof.

The TCP/UDP unit 24 is a functional block in a transport layer, and has only a general function without having a particular function. The TCP/UDP unit 24 is basically implemented as a function of the OS. The application unit 25 is an application functional block for remotely controlling the GW apparatus as network equipment, and particularly in this case, includes a server function (telnet server and the like).

The SIP-adaptation unit 26 is a functional block having the GW function relating to the SIP procedure, such as receiving a TCP-SYN packet, embedding the packet in an SIP message packet, and starting the SIP procedure.

The GW apparatus processes packets (a) to (e) below in the following manner.
(a) TCP-SYN, TCP-SYN-ACK packet
(b) UDP packet
(c) SIP message packet
(d) Packet addressed to the GW apparatus
(e) Other packets

All packets (a) and (c) and a part of packets (b) (first packet in the session) of the above packets are distributed to the SIP-adaptation unit 26 by the filtering unit 22. The packets (d) and (e) are transferred to the routing unit 23 by the filtering unit 22, and transferred to the TCP/UDP unit 24 or the application unit 25 if the packet is addressed to an IP address held by the GW apparatus. If the packet is not addressed to the GW apparatus, the packets are forwarded to a suitable destination (port) by the routing unit 23. In Fig. 1, constituent elements (network node and the like) other than the GW apparatuses 11 and 12 are general, and do not require a particular function or configuration according to the present invention.

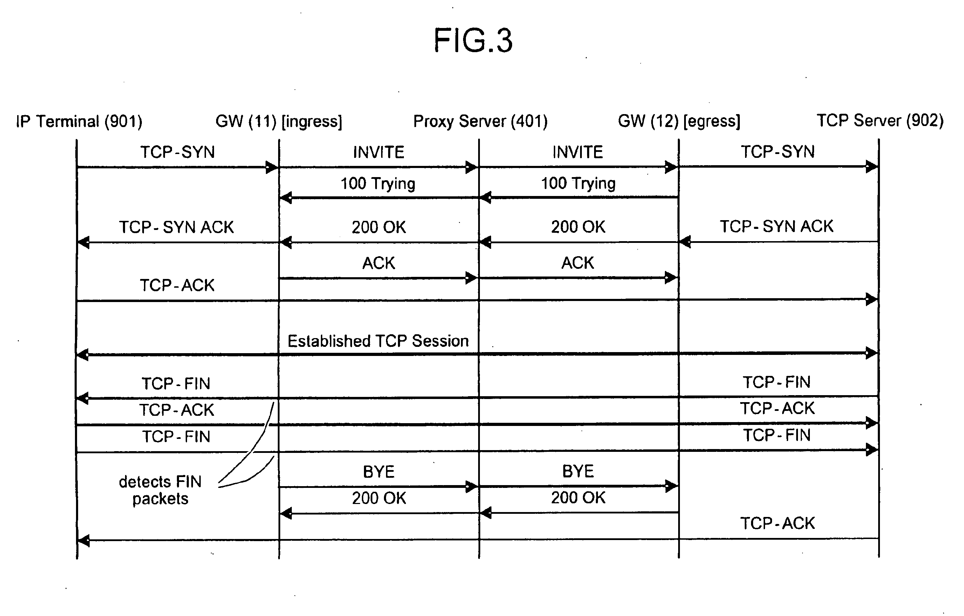

In the configuration shown in Fig. 1, an operation when the TCP session is started in response to a request by the terminal 901 is explained with reference to Fig. 3. Fig. 3 is a message sequence chart relating to each constituent element of the network when the TCP session is established.

A TCP-SYN packet as a TCP session-establishing request is issued by the IP terminal 901. In this case, it is assumed that a destination of the TCP-SYN packet is the IP terminal 902 as a TCP server.

The GW apparatus 11 captures the TCP-SYN packet. Because the input packet is TCP-SYN, the filtering unit 22 in the GW apparatus 11 transfers the input TCP-SYN packet to the SIP-adaptation unit 26. The SIP-adaptation unit 26 analyzes the address, a port number, and the like of the TCP-SYN packet, to generate an SIP INVITE packet as a call-connection request packet corresponding thereto and transfers the generated SIP INVITE packet (INVITE message) to the SIP proxy server 401. For the TCP-SYN packet, a method for embedding the TCP-SYN packet in the INVITE message and a method for generating the INVITE message and transferring the message as it is can be used. In the first embodiment, the method of embedding the TCP-SYN packet in the INVITE message is explained. A sender of the INVITE message is the IP terminal 901, and a final destination is the IP terminal 902. This is because, at the time of receiving the TCP-SYN packet, the GW apparatus 11 cannot find the address of the GW apparatus 12 as the destination. To maintain a symmetric property, it is desired that the sender is the IP terminal 901 as well.

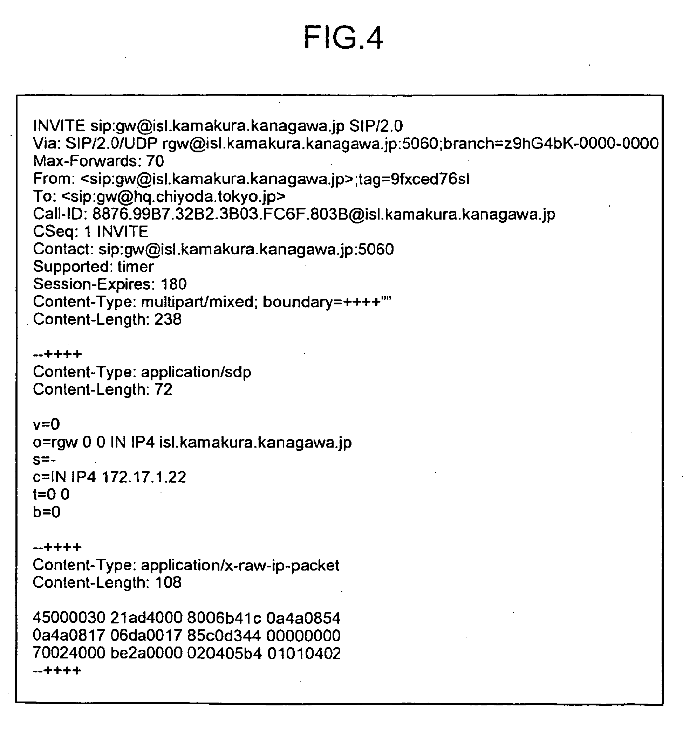

Fig. 4 is an example of the TCP-SYN packet embedded in the SIP INVITE message. In this case, The TCP packet is put in a body area that can store various data in the SIP by a plurality of encoding methods. One of the methods is an SDP (Session Description Protocol: IETF RFC2327) and the other one is raw packet data of the TCP. In the example of Fig. 4, MIME format referred to as x-raw-ip-packet is specified for incorporation. In this example, a method in which a hexadecimal number is described in a text for each 4-byte is used. "4500 0030 ......" indicates that the IP packet is embedded as it is.
In the TCP, there are some fields to be filled at the time of generating the packet, such as sequence number, check sum, and the like. However, it is not an object to interfere in the TCP itself, mapping for each IP packet is the simplest method.

Upon receipt of an INVITE message from the GW apparatus 11, the SIP proxy server 401 transfers the INVITE message to the IP terminal 902 as the destination TCP server. At this time, the SIP proxy server 401 returns a provisional response message such as 100 Trying to the GW apparatus 11.

Upon receipt of the INVITE message, the GW apparatus 12 returns a provisional response message such as 100 Trying to the SIP proxy server 401, and extracts the TCP-SYN packet again from the INVITE message to transfer the extracted TCP-SYN packet to the IP terminal (TCP server) 902. Thus, the SIP procedure is closed between the GW apparatuses 11 and 12, and cannot be seen from the IP terminals. In the GW apparatus 12, the SIP-adaptation unit 26 processes the INVITE message. Because the TCP-SYN packet is directly embedded in the INVITE message as in the IP frame, the TCP-SYN packet is extracted from the INVITE message by the SIP-adaptation unit 26, and the extracted TCP-SYN packet is transferred from the SIP-adaptation unit 26 to the routing unit 23, and finally reaches the IP terminal 902 through a routing process performed by the routing unit 23.

Upon receipt of the TCP-SYN packet, if a relevant server daemon has been started up, the IP terminal 902 receives the request and returns a TCP-SYN-ACK packet as a TCP-session-establishment response packet to the IP terminal 901.

The GW apparatus 12 captures the TCP-SYN-ACK packet, and embeds the TCP-SYN-ACK packet into a call-connection response packet (200 OK message), which is a reception response of the INVITE message, to send the TCP-SYN-ACK packet to the SIP proxy server 401. The SIP proxy server 401 transfers the 200 OK message including the INVITE message to the GW apparatus 11, if there is no problem.

Upon receipt of the 200 OK message, the GW apparatus 11 extracts the TCP-SYN-ACK packet from the 200 OK message in the same manner as in the GW apparatus 12, transfers the extracted TCP-SYN-ACK packet to the IP terminal 901 and sends an SIP-ACK message to the SIP proxy server 401. At this time, the TCP session is established between the IP terminals 901 and 902, and the session is also established in the SIP protocol level. The SIP-ACK message is received by the GW apparatus 12 via the SIP proxy server 401. In this manner, a session establishment procedure by the SIP including ACK is complete. However, the sender (From header) and the destination (To header) in the SIP procedure are addresses of the IP terminals 901 and 902, respectively.

Upon receipt of the TCP-SYN-ACK packet, the IP terminal 901 transmits the TCP-ACK packet to the IP terminal 902. The TCP-ACK packet and a data packet to be transmitted thereafter are transferred in the core network 201 without being captured by the GW apparatus. That is, in the GW apparatuses 11 and 12, all these packets are transferred from the filtering unit 22 to the routing unit 23, and the GW apparatuses 11 and 12 perform a function as a normal router by the routing process by the routing unit 23. In this manner, communication in the established TCP session is performed between the IP terminals 901 and 902 after the transmission of the TCP-ACK packet.

When the communication is complete and the TCP session is disconnected, a TCP-FIN packet as a TCP-session termination packet is issued, respectively, from the IP terminals 901 and 902 to the other IP terminal. The IP terminals 901 and 902 having received the TCP-FIN packet return a TCP-ACK message to the other IP terminal. In this case, the GW apparatus 11 as a starting point of the INVITE message detects the TCP-FIN packet sent from the IP terminals 901 and 902, generates a BYE request as a call-disconnection request packet at the time of detecting the two TCP-FIN packets sent from the IP terminals 901 and 902, to transmit the BYE request to the SIP proxy server 401. In the GW apparatus 11, the SIP-adaptation unit 26 detects the TCP-FIN packet to issue the BYE request. In this case, the TCP-FIN packet and the TCP-ACK packet are relayed directly without being embedded in the BYE request as the call-disconnection request packet. Thus, the procedure is simplified.

Upon receipt of the BYE request, the SIP proxy server 401 transfers the BYE request to the GW apparatus 12. The GW apparatus 12 transfers a 200 OK response message via the SIP proxy server 401, in response to the BYE request. In this manner, the procedure relating to a series of sessions is complete.

In the first embodiment, the TCP-SYN packet and the TCP-SYN-ACK packet are embedded in the INVITE message and the 200 OK message, respectively, and transmitted. Accordingly, synchronization between session establishment by the SIP and session establishment by the TCP are achieved, and when TCP data starts to flow, session by the SIP has been established without fault. Particularly, this method is effective when QoS setting is included in the core network. It is because QoS processing can be performed reliably relative to the first data.

When the TCP session is disconnected by a TCP-RST packet, the GW apparatus on the IP terminal side that has issued the TCP-RST packet captures the TCP-RST packet, and generates and issues a call-disconnection request packet, while transferring the TCP-RST packet as it is, thereby interrupting the TCP session and disconnecting call connection in the second IP network.

According to the first embodiment, a TCP session control packet is transferred between the IP terminals, while the TCP session control packet is embedded in the call-connection request/response packets, to establish the TCP session between the IP terminals, and at the same time, call in the call control network is also established. Accordingly, the TCP session in the existing IP communication can be relayed in the call control network.

### Second embodiment

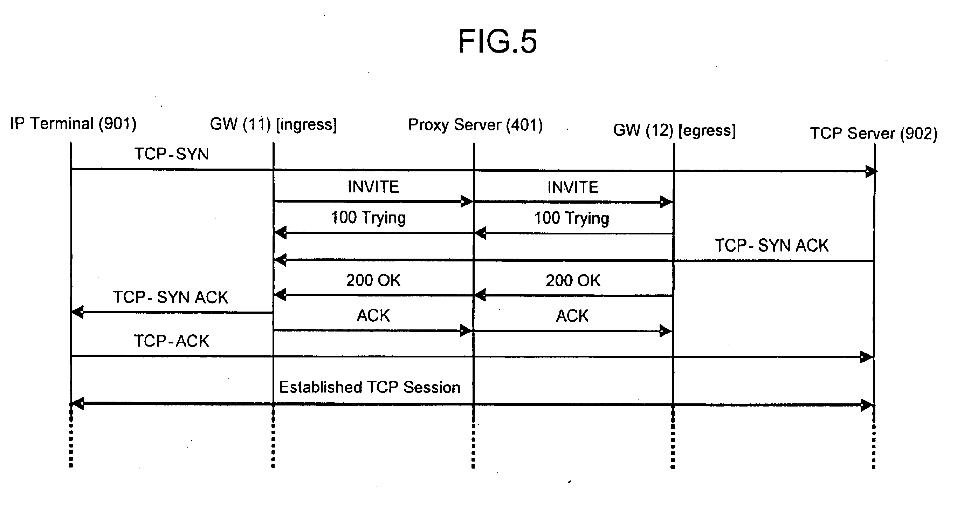

A second embodiment which shows the present invention is explained with reference to Fig. 5. In the second embodiment, in the GW apparatuses 11 and 12, all TCP packets are basically transferred as they are, and the GW apparatus 11 on an entrance side captures the TCP-SYN-ACK packet from the GW apparatus 12, and synchronizes the TCP-SYN-ACK packet with the 200 OK message of the SIP to transfer the TCP-SYN-ACK packet to the IP terminal 901.

If it is assumed that the TCP-SYN packet as the TCP session-establishing request is issued from the IP terminal 901, the GW apparatus 11 captures the TCP-SYN packet. The GW apparatus 11 transfers the TCP-SYN packet as it is. At the same time, the GW apparatus 12 generates an SIP INVITE packet as the call-connection request packet and transfers the generated SIP INVITE packet (INVITE message) to the SIP proxy server 401. Upon receipt of the INVITE message from the GW apparatus 11, the SIP proxy server 401 transfers the INVITE message to the GW apparatus 12 corresponding to the IP terminal at the destination. At this time, the SIP proxy server 401 returns the provisional response message such as 100 Trying to the GW apparatus 11.

Although the GW apparatus 12 also captures the TCP-SYN packet, the GW apparatus 12 transmits the TCP-SYN packet to the IP terminal 902 as it is. Upon receipt of the INVITE message, the GW apparatus 12 returns the provisional response message such as 100 Trying to the SIP proxy server 401.

Upon receipt of the TCP-SYN packet, the IP terminal 902 receives the request if the relevant server daemon is started up, and returns the TCP-SYN-ACK packet to the IP terminal 901. The GW apparatus 12 captures the TCP-SYN-ACK packet and transfers the TCP-SYN-ACK packet as it is, and sends the 200 OK message as the call-connection response packet to the SIP proxy server 401. The SIP proxy server 401 transfers the 200 OK message to the GW apparatus 11, if there is no problem.

Upon receipt of the TCP-SYN-ACK packet and the 200 OK message, the GW apparatus 11 captures these packet and message and transfers the TCP-SYN-ACK packet to the IP terminal 901, after having achieved synchronization between these two signals. Upon receipt of the TCP-SYN-ACK packet, the IP terminal 901 transmits the TCP-ACK packet to the IP terminal 902. In this manner, communication in the established TCP session is performed between the IP terminals 901 and 902 after transmission of the TCP-ACK packet.

Thus, in the second embodiment, the GW apparatus 11 as the sender achieves synchronization between request and response autonomously, while separately transferring the call control packet and the TCP session-establishing packet in the call control network.

### Third embodiment

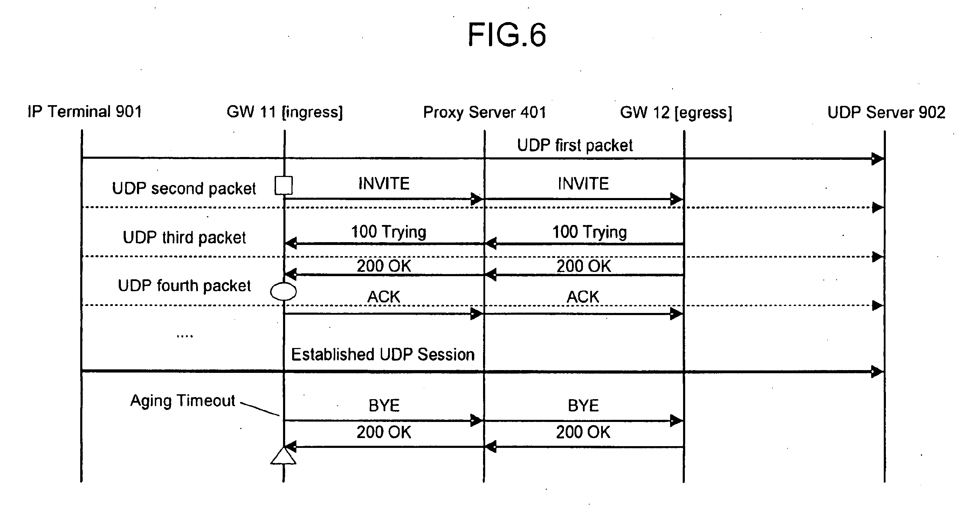

A third embodiment which does not describe the invention, but aspects thereof and aspects being useful to understand the invention is explained with reference to Fig. 6. In the third embodiment, an installation example for receiving UDP communication is explained. Fig. 6 is a message sequence chart relating to the respective constituent elements of the network when the UDP session is established in the configuration shown in Fig. 1.

The filtering unit 22 in the GW apparatus 11 detects the first packet in the UDP transmitted from the IP terminal 901. Upon detection thereof, the filtering unit 22 copies and transfers the UDP packet to the routing unit 23 and the SIP-adaptation unit 26 shown in Fig. 2. The packet transferred to the routing unit 23 is directly transferred to the WAN via the WAN port 21. The packet transferred to the SIP-adaptation unit 26 is used for extracting session information for generating the INVITE message. The generated INVITE message is transmitted to the GW apparatus 12 via the SIP proxy server 401.

In Fig. 6, a part shown by a square indicates that a filtering table used for filtering is presumptively defined in the filtering unit 22. That is, since the first UDP packet is confirmed for the session, the data packet in the same session is not transferred to the SIP-adaptation unit 26. The reason why it is provisionally defined is that the session itself is not completely accepted in the SIP procedure, in other words, in the session administration in the call control network.

That is, the filtering unit 22 has the filtering table in which a currently established UDP session list is stored. Therefore, upon receipt of the UDP packet, the filtering unit 22 refers to the UDP session list, and when there is no hit, assumes that the UDP packet is in a new session, transfers the UDP packet to the SIP-adaptation unit 26 to generate and issue the call-connection request packet, and transfers the packet to the routing unit 23 to transfer the packet into the call control network as it is. On the other hand, when the received UDP packet has a hit in the UDP session list, the packet is not transferred to the SIP-adaptation unit 26, and transferred only to the routing unit 23 and transferred into the call control network as it is.

The SIP procedure is basically the same as in the TCP. However, the processing for embedding a packet corresponding to the TCP-SYN packet or the TCP-SYN-ACK packet in the INVITE message or extracting the packet is not performed. Only the normal SIP procedure is performed between the GW apparatuses 11 and 12.

That is, upon receipt of the INVITE message from the GW apparatus 11, the proxy server 401 transfers the INVITE message to the GW apparatus 12 corresponding to the IP terminal at the destination. At this time, the SIP proxy server 401 returns 100 Trying to the GW apparatus 11. Upon receipt of the INVITE message, the GW apparatus 12 sends the 100 Trying and the 200 OK message, which is the call-connection response message, to the SIP proxy server 401. The SIP proxy server 401 transfers the 200 OK message to the GW apparatus 11, if there is no problem.

UDP packets are sequentially transferred during execution of the SIP procedure. These UDP packets are transferred to the IP terminal 902 at the destination by normal routing in the core network 201.

In Fig. 6, an ellipse indicates that registration in the filtering table in the filtering unit 22 is changed from provisional to formal. The UDP session is successfully recognized administratively in the call control network by the SIP procedure.

Thereafter, when the UDP session is not used, call connection is disconnected by an aging function to release the resource, because there is no clear disconnection means of the session. In other words, when it is detected that there is no packet flow for a call during a predetermined period, call connection is disconnected to release the resource. Aging is performed by the GW apparatus 11, which is at the starting point of the SIP procedure, and the GW apparatus 11 issues a BYE request upon time-out, to disconnect the session.

At timing indicated by a triangle in Fig. 6, that is, at the time of receiving the 200 OK message from the GW apparatus 12, registration in the filtering table is deleted. It is because the UDP itself does not include a control packet.

In the third embodiment, a UDP packet that flows while connection to the call control network is being set by the call control procedure is not considered intentionally. Therefore, the possibility of the network node apparatus greatly increases. The UDP communication itself proceeds after the first UDP packet, regardless of establishment of call connection. However, by establishing the call connection in the call control network at the initial stage of a new UDP session as soon as possible, in a form not directly synchronized therewith, the application to the UDP communication is easily realized.

### Fourth embodiment

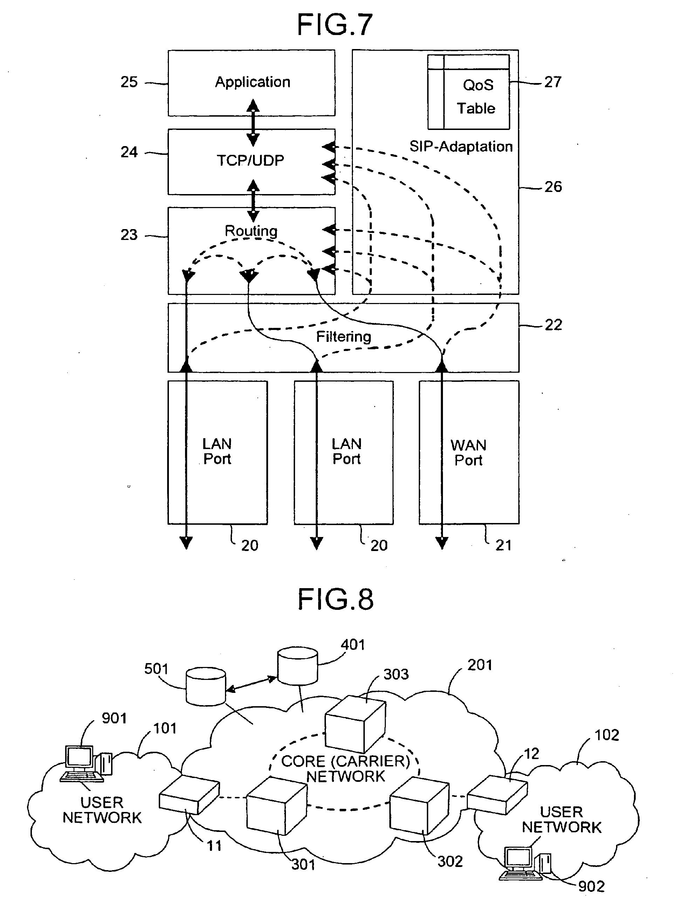

A fourth embodiment which shows the present invention is explained below with reference to Figs. 7 and 8. In the fourth embodiment, a procedure at the time of executing a call connection function accompanied with securing of resources is explained. Fig. 7 is a schematic of an internal configuration of the GW apparatus when the most basic QoS control is involved. In Fig. 7, a QoS table 27 is added to the configuration shown in Fig. 2. The QoS table 27 defines correspondence between the session information (protocol number, IP address, port number corresponding to protocol, a TOS (Type of Service) value, and the like) that characterizes individual IP communication session such as TCP and UDP issued by the IP terminal, and QoS information (peak rate, average rate, burst size, delay level, and the like) as the resource information desired to be secured on the call control network for letting the session in the call control network.

When the call connection function accompanied with securing of resources is executed, the SIP-adaptation unit 26 searches the QoS table 27 with the session information of the packet, which becomes a trigger at the time of generating the INVITE request message;
· when there is a hit, the SIP-adaptation unit 26 embeds the corresponding QoS information described in the QoS table 27 into the INVITE message; or
· when there is no hit, the SIP-adaptation unit 26 generates the INVITE message without including the QoS information or embeds the QoS information, which does not request resources substantially, into the INVITE message.

That is, upon receipt of the TCP-SYN packet of the TCP or the first packet of the UDP, the SIP-adaptation unit 26 searches the QoS table 27 with the session information extracted from the packet. When there is a hit, the SIP-adaptation unit 26 issues the INVITE request message including the corresponding resource information and the packet, and when there is no hit in the table search, the SIP-adaptation unit 26 performs the call connection, assuming the packet as a session not accompanied with securing of resources. Accordingly, communication with certain quality assurance can be realized by applying the QoS to the existing IP communication session in which association with the QoS is difficult.

In the case of SIP, there is a method of embedding the QoS information in the SDP. Embeddable QoS information includes the followings:
1. b parameter: indicating a bandwidth
2. Audio/Video RTP profile (IETF RFC3551)
The RTP profile can basically connect the contents described therein with the bandwidth and the like substantially fixedly. Association is also possible by preparing and searching a table in which the profile and resource information of the network is connected with each other. In the INVITE message shown in Fig. 4, b is specified to be 0 (b=0). However, by changing it to, for example, b=2000, an INVITE message requesting a band can be generated. In the case of SDP, extension is possible in the future so that various parameters can be described.

A setting procedure of the QoS is explained next. Fig. 8 is an example in which a QoS server 501 is located on the network shown in Fig. 1 in addition to the SIP server 401. An interface between the SIP server 401 and the QoS server 501 is specified, and for example, an interface such as SIP-CGI (IETF RFC3050) can be applied. The QoS server 501 ascertains whole IP route information in the core network 201, which is the call control network to be controlled, to ascertain all the situations of resources on each route, and as a result thereof, has a function for urging setting change to secure the resources relative to the respective nodes 301 to 303.

As another system format, it can be considered that a plurality of the SIP servers 401 and the QoS servers 501 are provided to pre-set a call-control covering area of the respective servers 401 and 501 in the core network 201. In this case, a network node in charge of the call control in the respective servers 401 and 501 is specified, respectively. In this case, a function for by comparing a QoS request with newly available resource information to determine whether the QoS request can be accepted is required for the respective QoS servers 501. That is, the respective QoS servers 501 need to be able to determine which route the requested session passes through, and the requested session requires which resource at which port in which node. In the case of Fig. 8, because there is only one QoS server 501 in the core network 201, the QoS server 501 needs to be able to determine which route the requested session passes through, and the requested session requires which resource at which port in which node, for the three core network nodes 301 to 303. When the TCP session shown in Fig. 3 is accompanied with the QoS request, the QoS server 501 manages the route table of these networks and the resource information of all ports of the respective nodes.

In this manner, when a plurality of the QoS servers 501 is provided, the respective QoS servers 501 request the node in the call-control covering area to determine whether the call control accompanied with resources can be accepted in the respective call-control covering areas and to change the setting for securing the actual resources. Specifically, the respective QoS servers 501 determine whether the call connection request accompanied with securing of resources can be accepted at the time of sequentially transferring the SIP INVITE packet as the call-connection request packet between the QoS servers 501. When the call connection request is acceptable, the QoS server 501 transfers the request to the next QoS server 501, and when the call connection request is not acceptable, the QoS server 501 responds as an error relative to the request in halfway. Accordingly, the QoS servers 501 sequentially determine whether the requested call connection is acceptable.

Two methods for not concentrating the information management on the QoS server 501 are explained below.

When the TCP is received, as shown in Fig. 6, such a method is used that the TCP packet such as the TCP-SYN or TCP-SYN-ACK packet is not embedded in the INVITE message. The respective network nodes 301 to 303 detect the passage of the TCP packet such as the TCP-SYN or TCP-SYN-ACK packet when the TCP packet flows in the core network, to notify the QoS server 501 of the passage of the TCP packet together with information (identification information of the node and the port number of the port through which the TCP packet has passed) for allowing the QoS server 501 to determine the call route based on the detection and information relating to availability of the resource of the port. The QoS server 501 can ascertain an arc route based on the identification information of the node and the port number received from the respective network nodes 301 to 303, and can ascertain the condition of the resources on the route based on the information relating to the availability of the resources received from the respective network nodes 301 to 303. The QoS server 501 compares the information relating to the availability of the resources at the respective nodes on the ascertained route with a resource value in the SIP INVITE packet, to determine whether the call connection can be accepted.

When the UDP is received, when the GW apparatus on the entrance side of the call control network detects the first UDP packet, the GW apparatus generates a packet having the same IP header and UDP header and size 0 or an exclusive predetermined data pattern and transfers the generated UDP packet having a unique data pattern together with the normal first UDP packet simultaneously. The respective nodes 301 to 303 in the core network 201 detect the unique UDP packet to notify the QoS server 501 of the passage of the UDP packet together with information (identification information of the node and the port number of the port through which the UDP packet has passed) for allowing the QoS server 501 to determine a call route based on the detection and information relating to availability of the resource of the port. Accordingly, the QoS server 501 can ascertain the call route and the availability of the resources in the respective nodes on the route in the same manner as above. The QoS sever 501 compares the information relating to the availability of the resources at the respective nodes on the route with a resource value in the SIP INVITE packet, to determine whether the call connection can be accepted. The unique UDP packet is discarded by the GW apparatus on an exit side.

A case that the control session is established and a protocol that performs negotiation for establishing another session in the control session is executed between the existing IP terminals via the core network 201 as the call control network is explained. In such a protocol, the control session is first started up in the TCP, the session information, the QoS information, and the like are negotiated in the control session, and a TCP or UDP session different from the control session is established to transfer data. Examples of the protocol include SIP, RTSP, H.323, and ftp mentioned above. However, in the case of the ftp, because the data transfer session is also TCP, the ftp can be easily made to be a call control target.

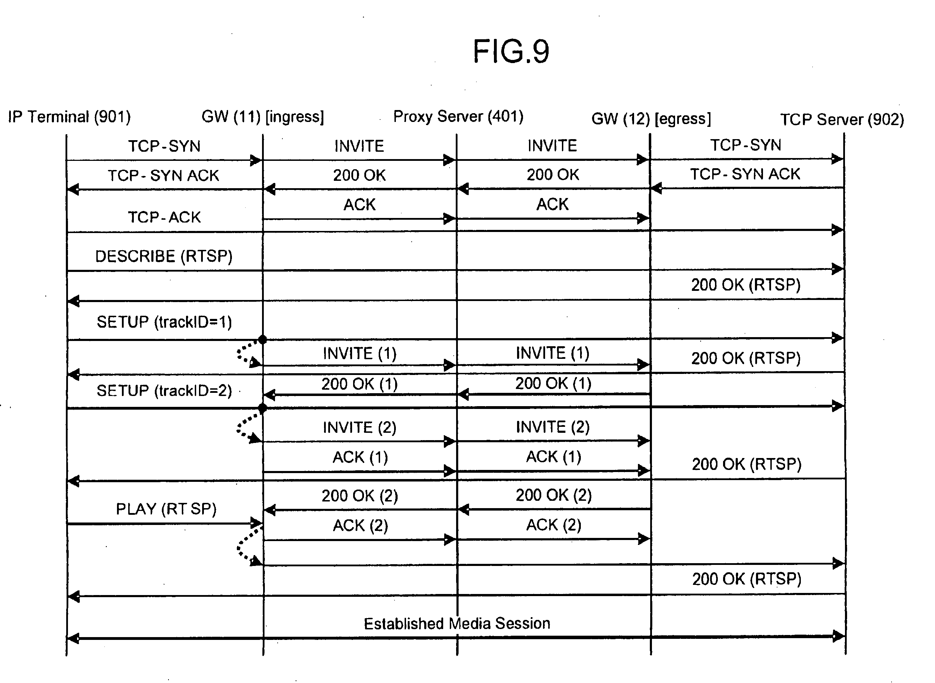

A case of RTSP is explained with reference to Fig. 9. Fig. 9 is a sequence diagram of a procedure for recognizing the RTSP data transfer session as the call control target in the basic network configuration shown in Fig. 1.

When the IP terminal 901 establishes the TCP session for RTSP, the GW apparatus 11 uses a normal TCP-session applying procedure, and also recognizes that it is the RTSP session.

The GW apparatus 11 peeks at the RTSP control data being transferred on the RTSP session and performs analysis. Particularly, because all pieces of media session information are described in the 200 OK message relative to a DESCRIBE message, all pieces of information can be collected. In this example, a SETUP message corresponding to a session establishment command is issued twice as track ID=1, track ID=2, thereby indicating that there are two media sessions. In this case, therefore, a call control request in the call control network, here, the SIP INVITE message is generated synchronously with the two SETUP messages. Correspondence among the track ID, the port number of the session, and the QoS information is described in the 200 OK response message relative to the DESCRIBE message.

After the establishment of the media session, the media data actually starts to flow according to a PLAY message. In this case, it is most preferable to hold the PLAY message in the GW apparatus 11 until the session establishment in the SIP is complete. All the protocols can capture the data session information in the manner described above. When H.323 or a terminal directly sends the SIP message, the same procedure can correspond thereto.

When a protocol that establishes the control session such as SIP, RTSP, H.323, or ftp to perform negotiation for establishing another session therein is executed between the exiting IP terminals via the call control network, the GW apparatus on the entrance side captures and relays the negotiation packet, and at the same time, analyzes the negotiation packet to extract the session information used by the protocol in the future. Accordingly, a command corresponding to a session establishment command specified in each protocol is issued, and a call for allowing these sessions to pass is established in the call control network.

A case of ftp is explained next. In the ftp, any particular consideration is not required for a trigger to start the call control, because the data transfer session is the TCP. However, when QoS setting is included, for example, a procedure described below needs to be applied.

It is so set that the QoS information to be applied to a data transfer session can be determined at a point in time when the ftp control session is started up. In other words, data is registered in the QoS table 27 shown in Fig. 7, so that required QoS information can be searched for from ftp control session information (transfer IP address and destination port number "20"). At this time, if in a passive mode, the content transferred on the ftp control is analyzed to capture the destination port number, and if not in the passive mode, the destination port number is recognized as "20". When the GW apparatus 11 captures the TCP-SYN packet agreeing with the above condition, the QoS information obtained by searching with the destination port number "20" is embedded in the SIP INVITE message to establish the session with QoS.

Accordingly, even in the ftp passive mode in which the port number is not fixed, the session can be understood as ftp data session, and a session pass accompanied with desired QoS can be secured in the core network.

When the session established by negotiation after the establishment of the control session requests to secure network resources as a result of analysis of description therein, or when a characteristic value of application data amount flowing in the session is calculated based on a certain rule (such as RTP Profile (:RFC 3551), the GW apparatus on the entrance side analyzes the content thereof as well, and when a request for establishing the session is issued, the GW apparatus on the entrance side establishes a call in the call control network, while securing the network resources.

Further, when the IP terminal directly issues the SIP INVITE packet as the call-connection request packet, the GW apparatus allows the SIP INVITE packet to pass by, so long as there is no problem in the request content of the SIP INVITE packet, so that the call connection control can correspond to a request from outside of the GW apparatus.

### INDUSTRIAL APPLICABILITY

As explained above, the IP-packet relay method in a communication network according to the present invention is suitably applied to a communication network that including an IP (Internet protocol) network, a call control network based on the IP network, and a gateway that connects the IP network and the call control network.

## Claims

1. An internet protocol (IP)-packet relay method applied to a communication network including a plurality of first IP networks that accommodates IP terminals, a second IP network that is located among the first IP networks and performs call control and call management, and a gateway that connects the first IP networks to the second IP network, the IP-packet relay method comprising, in the gateway:
receiving a TCP session request packet from one of the first IP networks or a data packet that is initially transmitted;
analyzing the received packet; and
establishing a call corresponding to the received packet in the second IP network to allow an IP packet from the one of the first IP networks to another one of the first IP networks to pass through the second IP network, **characterized in that**:
the plurality of first IP networks do not perform call control;
the gateway includes a first gateway connected to the one of the first IP networks that accommodates a source IP terminal, and a second gateway connected to the another one of the first IP networks that accommodates a destination IP terminal; and
the IP-packet relay method further comprises establishing the call in the second IP network simultaneously with establishment of a TCP session between the source IP terminal and the destination IP terminal by:
the first gateway receiving a TCP session request packet from the source IP terminal;
the first gateway creating a call-connection request packet to issue the call-connection request packet and transferring the received TCP session request packet;
the second gateway transferring, upon receiving the TCP session request packet, the TCP session request packet to the destination IP terminal as it is;
the second gateway transferring, upon receiving a TCP session response packet from the destination IP terminal, the TCP session response packet as it is;
the second gateway issuing, upon receiving the call-connection request packet, a call-connection response packet to the source IP terminal;
the first gateway receiving the TCP session response packet and the call-connection response packet;
the first gateway synchronizing the TCP session response packet and the call-connection response packet;
the first gateway transferring the TCP session response packet to the source IP terminal after having achieved synchronization between the TCP session response packet and the call-connection response packet; and
the source IP terminal transmitting, upon receipt of the TCP session response packet, a TCP-ACK packet to the destination IP terminal in order to perform, in the established TCP session, communication between the source IP terminal and the destination IP terminal after transmission of the TCP-ACK packet;
wherein the first gateway achieves, as a sender, synchronization between request and response autonomously, while separately transferring **the call control packet as the call-connection request packet and the TCP session-establishing packet as the TCP session request packet** in the second IP network.

2. The IP-packet relay method according to claim 1, wherein the source IP terminal and the destination IP terminal each issue a TCP session termination packet to disconnect the TCP session, the IP-packet relay method further comprising, in the first gateway:
creating a call-disconnection request packet in response to detection of the TCP session termination packets from the source IP terminal and the destination IP terminal; and
issuing the call-disconnection request packet to disconnect the call in the second IP network simultaneously with termination of the TCP session.

3. The IP-packet relay method according to claim 1, wherein any one of the source IP terminal and the destination IP terminal issues a TCP reset packet to disconnect the TCP session, the IP-packet relay method further comprising, in any one of the first gateway and the second gateway connected to the first IP network accommodating the IP terminal that has issued the TCP reset packet:
creating a call-disconnection request packet upon receiving the TCP reset packet; and
issuing the call-disconnection request packet and transferring the TCP reset packet, to disconnect the call in the second IP network simultaneously with termination of the TCP session.

4. The IP-packet relay method according to claim 1, wherein the gateway stores therein a table that contains session information characterizing an IP communication session established between the IP terminals associated with resource information on resources to be secured in the second IP network to allow the IP communication session to pass through the second IP network, the IP-packet relay method further comprising, in the gateway:
searching, upon receiving any one of the communication request packet and the data packet, the table with session information extracted from the received packet; and
issuing, when there is a hit, a call-connection request packet that includes resource information corresponding to the session information and the packet.

5. The IP-packet relay method according to claim 4, wherein the establishing includes determining, when there is no hit at the searching, that the IP communication session does not require allocation of resources, and establishing the call.

6. The IP-packet relay method according to claim 1, wherein the second IP network includes a quality of service (QoS) server, the IP-packet relay method further comprising, in the QoS server:
acquiring information on IP routes on a call control network to be controlled and resources on each of the IP routes;
requesting each node in the second IP network to change settings to secure resources; and
determining whether to accept a call control request that requires allocation of resources.

7. The IP-packet relay method according to claim 6, wherein
the QoS server includes a plurality of QoS servers,
the requesting includes each of the QoS servers requesting each node in a call-control coverage range to change settings to secure resources, and
the determining includes each of the QoS servers determining whether to accept the call control request for the call-control coverage range.

8. The IP-packet relay method according to claim 7, further comprising, in each of the QoS servers:
determining, upon receiving a call connection request that requires allocation of resources, whether to accept the call connection request;
transferring the call connection request to another QoS server when the call connection request is acceptable; and
issuing an error response when the call connection request is not acceptable.

9. The IP-packet relay method according to claim 6, further comprising:
each node notifying, when a TCP packet flows in the second IP network, the QoS server of information based on which the QoS server determines a call route and information on available resources of the node, and
the QoS server determining a call route and availability of resources in each node on the call route based on the information.

10. A gateway (11, 12) adapted to connect a plurality of first internet protocol (IP) networks (101, 102) that accommodate IP terminals (901, 902) and a second IP network (201) that is located among the first IP networks (101, 102) and performs call control and call management, the gateway (11, 12) comprising:
a receiving unit adapted to receive a TCP session request packet from one of the first IP networks (101, 102) or a data packet that is initially transmitted;
an analyzing unit adapted to analyze the received packet; and
an establishing unit adapted to establish a call corresponding to the received packet in the second IP network (201) to allow an IP packet from the one of the first IP networks (101, 102) to another one of the first IP networks (101, 102) to pass through the second IP network (201), **characterized in that**:
the plurality of first IP networks do not perform call control;
the gateway includes a first gateway connected to the one of the first IP networks that accommodates a source IP terminal, and a second gateway connected to the another one of the first IP networks that accommodates a destination IP terminal;
the gateway establishes the call in the second IP network simultaneously with establishment of a TCP session between the source IP terminal and the destination IP terminal by:
the first gateway being configured to
receive a TCP session request packet from the source IP terminal,
create a call-connection request packet to issue the call-connection request packet,
and
transfer the received TCP session request packet;
the second gateway being configured to
transfer, upon receiving the TCP session request packet, the TCP session request packet to the destination IP terminal as it is,
transfer, upon receiving a TCP session response packet from the destination IP terminal, the TCP session response packet as it is,
issue, upon receiving the call-connection request packet, a call-connection response packet to the source IP terminal;
the first gateway further being configured to
receive the TCP session response packet and the call-connection response packet,
synchronize the TCP session response packet and the call-connection response packet,
transfer the TCP session response packet to the source IP terminal after having achieved synchronization between the TCP session response packet and the call-connection response packet;
wherein the source IP terminal is configured to transmit, upon receipt of the TCP session response packet, a TCP-ACK packet to the destination IP terminal in order to perform, in the established TCP session, communication between the source IP terminal and the destination IP terminal after transmission of the TCP-ACK packet and wherein the first gateway is further configured to, as a sender, achieve synchronization between request and response autonomously, while separately transferring **the call control packet as the call-connection request packet and the TCP session-establishing packet as the TCP session request packet** in the second IP network.

## Patentansprüche

1. Ein Internetprotokoll (IP)-Paket-Weiterleitungsverfahren angewendet auf ein Kommunikationsnetzwerk beinhaltend eine Mehrzahl von ersten IP-Netzwerken, die IP-Terminals beherbergen, ein zweites IP-Netzwerk, das sich inmitten der ersten IP-Netzwerke befindet und Verbindungssteuerung und Verbindungsmanagement durchführt, und eine Schnittstelle, die die ersten IP-Netzwerke mit dem zweiten IP-Netzwerk verbindet, wobei das IP-Paket-Weiterleitungsverfahren in der Schnittstelle umfasst:
ein Empfangen eines TCP-Sitzungs-Anforderungspaketes von einem der ersten IP-Netzwerke oder eines Datenpaketes, das zunächst übersandt wird;
ein Analysieren des empfangenen Paketes; und
ein Errichten einer Verbindung entsprechend des empfangenen Paketes in dem zweiten IP-Netzwerk, um einem IP-Paket von dem einen der ersten IP-Netzwerke zu einem anderen der ersten IP-Netzwerke zu erlauben, durch das zweite IP-Netzwerk hindurch zu gehen,
**dadurch gekennzeichnet, dass**:
die Mehrzahl der ersten IP-Netzwerke keine Verbindungssteuerung durchführt;
dass die Schnittstelle eine erste, mit dem einen der ersten IP-Netzwerke, das ein Ursprungs-IP-Terminal beherbergt, verbundene Schnittstelle und eine zweite, mit dem anderen der ersten IP-Netzwerke, das ein Ziel-IP-Terminal beherbergt, verbundene Schnittestelle beinhaltet; und
dass das IP-Paket-Vlleiterleitungsverfahren darüberhinaus ein Errichten der Verbindung in dem zweiten IP-Netzwerk gleichzeitig mit einem Errichten einer TCP-Sitzung zwischen dem Ursprungs-IP-Terminal und dem Ziel-IP-Terminal umfasst, durch:
Empfangen eines TCP-Sitzungs-Anforderungspaketes von dem Ursprungs-IP-Terminal durch die erste Schnittstelle;
Erzeugen eines Verbindungs-Anforderungspaketes zum Ausgeben des Verbindungs-Anforderungspaketes und Übermitteln des empfangenen TCP-Sitzungs-Anfvrderungspaketes durch die erste Schnittstelle;
Übermitteln, auf den Empfang des TCP-Sitzungs-Anforderungspaketes, des TCP-Sitzungs-Anforderungspaketes an das Ziel-IP-Terminal wie es ist, durch die zweite Schnittstelle;
Übermitteln, auf den Empfang eines TCP-Sitzungs-Antwortpaketes von dem Ziel-IP-Terminal, des TCP-Sitzungs-Antwortpaketes wie es ist, durch die zweite Schnittstelle;
Ausgeben, auf den Empfang des Verbindungs-Anforderungspaketes, eines Verbindungs-Antwortpaketes an das Ursprungs-IP-Terminal, durch die zweite Schnittstelle;
Empfangen des TCP-Sitzungs-Antwortpaketes und des Verbindungs-Antwortpaketes durch die erste Schnittstelle;
Synchronisieren des TCP-Sitzungs-Antwortpaketes und des Verbindungs-Antwortpaketes durch die erste Schnittstelle;
Übermitteln des TCP-Sitzungs-Antwortpaketes an das Ursprungs-IP-Terminal nach dem Erreichen einer Synchronisation zwischen dem TCP-Sitzungs-Antwortpaket und dem Verbindungs-Antwortpaket durch die erste Schnittstelle; und
Übersenden, auf den Empfang des TCP-Sitzungs-Antwortpaketes, eines TCP-ACK-Paketes an das Ziel-IP-Terminal, um in der errichteten TCP-Sitzung eine Kommunikation zwischen dem Ursprungs-IP-Terminal und dem Ziel-IP-Terminal nach einer Übersendung des TCP-ACK-Paketes durchzuführen, durch das Ursprungs-IP-Terminal;
wobei die erste Schnittstelle als ein Sender eine Synchronisation zwischen Anforderung und Antwort autonom erreicht, während separat das Verbindungs-Steuerpaket als das Verbindungs-Anforderungspaket und das TCP-Sitzungs-Errichtungspaket als das TCP-Sitzungs-Anforderungspaket in das zweite IP-Netzwerk übermittelt wird.

2. Das IP-Paket-Weiterleitungsverfahren gemäß Anspruch 1,
wobei das Ursprungs-IP-Terminal und das Ziel-IP-Terminal beide ein TCP-Sitzungs-Ende-Paket zum Trennen der TCP-Sitzung ausgeben, wobei das IP-Paket-Weiterleitungsverfahren in der ersten Schnittstelle darüberhinaus umfasst:
ein Erzeugen eines Verbindungs-Trenn-Anfvrderungspaketes als Antwort auf ein Erfassen des TCP-Sitzungs-Ende-Paketes von dem Ursprungs-IP-Terminal und dem Ziel-IP-Terminal; und
ein Ausgeben des Verbindungs-Trenn-Anforderungspaketes zum Trennen der Verbindung in dem zweiten IP-Netzwerk gleichzeitig mit einem Beenden der TCP-Sitzung.

3. Das IP-Paket-Weiterleitungsverfahren gemäß Anspruch 1, wobei irgendeines des Ursprungs-IP-Terminals und des Ziel-IP-Terminals ein TCP-Rücksetzpaket zum Trennen der TCP-Sitzung ausgibt, wobei das IP-Paket-Weiterleitungsverfahren darüberhinaus umfasst, in irgendeiner der ersten Schnittstelle und der zweiten Schnittstelle verbunden mit dem ersten IP-Netzwerk beherbergend das IP-Terminal, das das TCP-Rücksetzpaket ausgegeben hat:
ein Erzeugen eines Verbindungs-Trenn-Anforderungspaketes auf den Empfang des TCP-Rücksetzpaketes; und
ein Ausgeben des Verbindungs-Trenn-Anforderungspaketes und ein Übermitteln des TCP-Rücksetzpaketes, um die Verbindung in dem zweiten IP-Netzwerk simultan mit einem Beenden der TCP-Sitzung zu trennen.

4. Das IP-Paket-WeiterleitungsverfahrAn nach Anspruch 1,
wobei die Schnittstelle darin eine Tabelle speichert, die eine IP-Kommunikationssitzung, die zwischen den IP-Terminals errichtet ist, charakterisierende Sitzungsinformationen beinhaltet, die mit Ressourceninformationen über in dem zweiten IP-Netzwerk zu sichernde Ressourcen assoziiert sind, um der IP-Kommunikationssitzung zu erlauben, durch das zweite IP-Netzwerk zu gehen, wobei das IP-Paket-Weiterleitungsverfahren in der Schnittstelle darüberhinaus umfasst:
ein Durchsuchen, auf einen Empfang eines beliebigen des Kommunikations-Ariforderurigspakets und des Datenpaketes, der Tabelle mit Sitzungsinformationen, die aus dem empfangenen Paket extrahiert wurden; und
ein Ausgeben, wenn es einen Treffer gibt, eines Verbindungs-Anforderungspaketes, das Ressourceninformationen entsprechend der Sitzungs-Informationen und des Paketes enthält.

5. Das IP-Paket-Weiterleitungsverfahren gemäß Anspruch 4, wobei das Errichten beinhaltet: Bestimmen, wenn es keinen Treffer beim Suchen gibt, dass die IP-Kommunikationssitzung keine Allokation von Ressourcen benötigt, und Errichten der Verbindung.

6. Das IP-Paket-Weiterleitungsverfahren gemäß Anspruch 1, wobei das zweite IP-Netzwerk einen Dienstgüte (QoS)-Server beinhaltet, wobei das IP-Paket-Weiterleitungsverfahren darüberhinaus in dem QoS-Server umfasst:
ein Erlangen von Informationen über IP-Routen auf einem zu steuernden Verbindungs-Steuerungs-Netzwerk und über Ressourcen aufjeder der IP-Routen;
ein Auffordern jedes Knotens in dem zweiten IP-Netzwerk zum Ändern von Einstellungen zum Sichern von Ressourcen; und
ein Bestimmen, ob eine Verbindungs-Steuerungs-Anforderung, die eine Allokation von Ressourcen benötigt, zuzulassen ist.

7. Das IP-Paket-Weiterleitungsverfahren gemäß Anspruch 6, wobei
der QoS-Server eine Mehrzahl von QoS-Servern beinhaltet,
das Auffordern beinhaltet, durch jeden der QoS-Server jeden Knoten in einer Verbindungs-Steuerungs-Abdeckreichweite aufzufordern, Einstellungen zum Sichern von Ressourcen zu ändern, und
das Bestimmen beinhaltet, durch jeden der QoS-Server zu bestimmen, ob die Verbindungs-Steuerungs-Anforderung für die Verbindungs-Steuerungs-Abdeckreichweite zuzulassen ist.

8. Das IP-Paket-Weiterleitungsverfahren gemäß Anspruch 7, darüberhinaus umfassend in jedem der QoS-Server:
ein Bestimmen auf den Empfang einer Verbindungs-Anforderung, die eine Allokation von Ressourcen benötigt, ob die Verbindungs-Anforderung zuzulassen ist;
ein Übermitteln der Verbindungs-Anforderung an einen anderen QoS-Server wenn die Verbindungs-Anforderung zulässig ist; und
ein Ausgeben einer Fehlerantwort, wenn die Verbindungs-Anforderung nicht zulässig ist.

9. Das IP-Paket-Weiterleitungsverfahren gemäß Anspruch 6, darüberhinaus umfassend:
ein Mitteilen durch jeden Knoten, wenn ein TCP-Paket in dem zweiten IP-Netzwerk läuft, von Informationen an den QoS-Server, auf deren Basis der QoS-Server eine Verbindungsroute bestimmt, und von Informationen über verfügbare Resourcen des Knotens, und
ein Bestimmen einer Verbindungsroute und einer Verfügbarkeit von Ressourcen in jedem Knoten auf der Verbindungsroute basierend auf den Informationen durch den QoS-Server.

10. Eine Schnittstelle (11, 12), die dazu ausgebildet ist, eine Mehrzahl von ersten Internetprotokoll (IP)-Netzwerken (101, 102), die IP-Terminals (901, 902) beherbergen, und ein zweites IP-Netzwerk (201), das sich inmitten der ersten IP-Netzwerke (101, 102) befindet und das Verbindungssteuerung und Verbindungsmanagement durchführt, zu verbinden, wobei die Schnittstelle (11, 12) umfasst:
eine Empfangseinheit die ausgebildet ist zum Empfang eines TCP-Sitzungs-Anforderungspaketes von einem der ersten IP-Netzwerke (101, 102) oder eines Datenpaketes, das zunächst übersandt wird;
eine Analysiereinheit die ausgebildet ist zur Analyse des empfangenen Paketes; und
eine Errichtungseinheit die ausgebildet ist zum Errichten einer Verbindung entsprechend des empfangenen Paketes in dem zweiten IP-Netzwerk (201) zum Ermöglichen eines IP-Paketes von dem einen der ersten IP-Netzwerke (101, 102) zu einem anderen der ersten IP-Netzwerke (101, 102) durch das zweite IP-Netzwerk (201) hindurchzugehen,
**dadurch gekennzeichnet, dass**:
die Mehrzahl von ersten IP-Netzwerken keine Verbindungssteuerung durchführt;
dass die Schnittstelle eine erste Schnittstelle, die mit dem einen der ersten IP-Netzwerke, das ein Ursprungs-IP-Terminal beherbergt, verbunden ist, und eine zweite Schnittstelle, die mit dem anderen der ersten IP-Netzwerke, das ein Ziel-IP-Terminal beherbergt, verbunden ist, beinhaltet; und
dass die Schnittstelle die Verbindung in dem zweiten IP-Netzwerk gleichzeitig mit einem Errichten einer TCP-Sitzung zwischen dem Ursprungs-IP-Terminal und dem Ziel-IP-Terminal errichtet, durch:
Ausbilden der ersten Schnittstelle
- zum Empfangen eines TCP-Sitzung-Anforderungspaketes von dem Ursprungs-IP-Terminal,
- zum Erzeugen eines Verbindungs-Anforderungspaketes zum Ausgeben des Verbindungs-Anforderungspaketes, und
- zum Übermitteln des empfangenen TCP-Sitzungs-Anforderungspaketes;
Ausbilden der zweiten Schnittstelle
- zum Übermitteln, nach einem Empfang des TCP-Sitzungs-Anforderungspaktes, des TCP-Sitzungs-Anforderungspaketes an das Ziel-IP-Terminal wie es ist,
- zum Übermitteln, nach einem Empfang eines TCP-Sitzungs-Antwortpaktes von dem Ziel-IP-Terminal, des TCP-Sitzungs-Antwortpaktes wie es ist, und
- zum Ausgeben, nach einem Empfang des Verbindungs-Anforderungspaketes, eines Verbindungs-Antwortpaktes an das Ursprungs-IP-Terminal;
darüberhinaus Ausbilden der ersten Schnittstelle
- zum Empfangen des TCP-Sitzungs-Antwortpaketes und des Verbindungs-Antwortpaketes,
- zum Synchronisieren des TCP-Sitzungs-Antwortpaketes und des Verbindungs-Antwortpaketes, und
- zum Übermitteln des TCP-Sitzungs-Antwortpaketes an das Ursprungs-IP-Terminal, nachdem eine Synchronisation zwisehen dem TCP-Sitzungs-Antwortpaket und dem Verbindungs-Antwortpaket erreicht worden ist;
wobei das Ursprungs-IP-Terminal ausgebildet ist zum Übermitteln, auf einen Empfang des TCP-Sitzungs-Antwortpaketes, eines TCP-ACK-Paketes an das Ziel-IP-Terminal um, in der errichteten TCP-Sitzung, eine Kommunikation zwischen dem Ursprungs-IP-Terminal und dem Ziel-IP-Terminal nach einer Übertragung des TCP-ACK-Paketes durchzuführen, und wobei die erste Schnittstelle darüber hinaus ausgebildet ist zum unabhängigen Erreichen, als ein Sender, einer Synchronisation zwischen Anforderung und Antwort, während eines separaten Übermittelns des Verbindungs-Steuerpaketes als das Verbindungs-Anforderungspaket und des TCP-Sitzungs-Errichtungspaket als das TCP-Sitzungs-Anforderungspaket in dem zweiten IP-Netzwerk.

## Revendications

1. Procédé de relais de paquet de données IP (protocole Internet) appliqué à un réseau de communication comprenant une pluralité de premiers réseaux IP qui prennent en charge des terminaux IP, un second réseau IP qui se situe parmi les premiers réseaux IP et exécute une commande d'appel et une gestion d'appel, et une passerelle qui connecte les premiers réseaux IP au second réseau IP, le procédé de relais de paquet de données IP comprenant, dans la passerelle, les étapes consistant à :
recevoir un paquet de demande de session TCP en provenance de l'un des premiers réseaux IP ou un paquet de données initialement transmis ;
analyser le paquet reçu ; et
établir un appel correspondant au paquet reçu dans le second réseau IP pour permettre à un paquet IP en provenance de l'un des premiers réseaux IP vers un autre des premiers réseaux IP, de passer à travers le second réseau IP, **caractérisé en ce que** :
la pluralité de premiers réseaux IP n'exécutent pas de commande d'appel ;
la passerelle comprend une première passerelle connectée à l'un des premiers réseaux IP qui prend en charge un terminal IP de source, et une seconde passerelle connectée à l'autre des premiers réseaux IP, qui prend en charge un terminal IP de destination ; et
le procédé de relais de paquet de données IP comprend en outre une étape consistant à établir l'appel dans le second réseau IP simultanément avec l'établissement d'une session TCP entre le terminal IP de source et le terminal IP de destination grâce aux étapes suivantes :
la première passerelle reçoit un paquet de demande de session TCP en provenance du terminal IP de source ;
la première passerelle crée un paquet de demande de connexion d'appel pour émettre le paquet de demande de connexion d'appel et transfère le paquet de demande de session TCP reçu ;
la seconde passerelle transfère, lors de la réception du paquet de demande de session TCP, le paquet de demande de session TCP vers le terminal IP de destination tel quel ;
la seconde passerelle transfère, lors de la réception d'un paquet de réponse de session TCP en provenance du terminal IP de destination, le paquet de réponse de session TCP tel quel ;
la seconde passerelle émet, lors de la réception du paquet de demande de connexion d'appel, un paquet de réponse de connexion d'appel vers le terminal IP de source ;
la première passerelle reçoit le paquet de réponse de session TCP et le paquet de réponse de connexion d'appel ;
la première passerelle synchronise le paquet de réponse de session TCP et le paquet de réponse de connexion d'appel ;
la première passerelle transfère le paquet de réponse de session TCP vers le terminal IP de source après avoir réalisé une synchronisation entre le paquet de réponse de session TCP et le paquet de réponse de connexion d'appel ; et
le terminal IP de source transmet au terminal IP de destination, lors de la réception du paquet de réponse de session TCP, un paquet TCP-ACK afin d'exécuter, dans la session TCP établie, une communication entre le terminal IP de source et le terminal IP de destination après la transmission du paquet TCP-ACK;
dans lequel la première passerelle réalise de manière autonome, en tant qu'expéditeur, une synchronisation entre une demande et une réponse, tout en transférant de manière séparée le paquet de commande d'appel en tant que paquet de demande de connexion d'appel et le paquet d'établissement de session TCP en tant que paquet de demande de session TCP dans le second réseau IP.

2. Procédé de relais de paquet de données IP selon la revendication 1, dans lequel le terminal IP de source et le terminal IP de destination émettent chacun un paquet de fin de session TCP afin de déconnecter la session TCP, le procédé de relais de paquet de données IP comprenant en outre, dans la première passerelle, les étapes consistant à :
créer un paquet de demande de déconnexion d'appel en réponse à la détection des paquets de fin de session TCP en provenance du terminals IP de source et du terminal IP de destination ; et
émettre le paquet de demande de déconnexion d'appel afin de déconnecter l'appel dans le second réseau IP en même temps que la fin de la session TCP.

3. Procédé de relais de paquet de données IP selon la revendication 1, dans lequel n'importe lequel du terminal IP de source et du terminal IP de destination émet un paquet de réinitialisation TCP afin de déconnecter la session TCP, le procédé de relais de paquet de données IP comprenant en outre, dans n'importe laquelle de la première passerelle et de la seconde passerelle connectée au premier réseau IP prenant en charge le terminal IP ayant émis le paquet de réinitialisation TCP, les étapes consistant à :
créer un paquet de demande de déconnexion d'appel lors de la réception du paquet de réinitialisation TCP ; et
émettre le paquet de demande de déconnexion d'appel et transférer le paquet de réinitialisation TCP, afin de déconnecter l'appel dans le second réseau IP en même temps que la fin de la session TCP.

4. Procédé de relais de paquet de données IP selon la revendication 1, dans lequel la passerelle stocke à l'intérieur une table contenant des informations de session qui caractérisent une session de communication IP établie entre les terminaux IP, associées à des informations de ressource concernant des ressources à sécuriser dans le second réseau IP, pour permettre à la session de communication IP de passer à travers le second réseau IP, le procédé de relais de paquet de données IP comprenant en outre, dans la passerelle, les étapes consistant à :
rechercher, lors de la réception de n'importe lequel du paquet de demande de communication et du paquet de données, la table avec les informations de session extraites à partir du paquet reçu ; et
émettre, lorsqu'il y a correspondance, un paquet de demande de connexion d'appel comprenant les informations de ressource qui correspondent aux informations de session et au paquet.

5. Procédé de relais de paquet de données IP selon la revendication 4, dans lequel l'étape d'établissement comprend les étapes consistant à déterminer que la session de communication IP, lorsqu'il n'y a aucune correspondance lors de la recherche, ne nécessite pas une attribution de ressources, et à établir l'appel.

6. Procédé de relais de paquet de données IP selon la revendication 1, dans lequel le second réseau IP comprend un serveur de qualité de service (QoS), le procédé de relais de paquet de données IP comprenant en outre, dans le serveur de QoS, les étapes consistant à :
acquérir des informations concernant des chemins IP sur un réseau de commande d'appel à commander, et des ressources concernant chacun des chemins IP ;
demander à chaque noeud du second réseau IP de modifier des réglages afin de sécuriser les ressources ; et
déterminer s'il convient d'accepter une demande de commande d'appel qui requiert une attribution de ressources.

7. Procédé de relais de paquet de données IP selon la revendication 6, dans lequel :
le serveur de QoS comprend une pluralité de serveurs de QoS ;
l'étape de demande comprend une étape consistant à ce que chacun des serveurs de QoS demande à chaque noeud situé dans une zone de couverture de commande d'appel de modifier des réglages afin de sécuriser les ressources ; et
l'étape de détermination comprend une étape consistant à ce que chacun des serveurs de QoS détermine s'il convient d'accepter la demande de commande d'appel pour la zone de couverture de commande d'appel.

8. Procédé de relais de paquet de données IP selon la revendication 7. comprenant en outre, dans chacun des serveurs de QoS, les étapes consistant à :
déterminer, lors de la réception d'une demande de connexion d'appel nécessitant une attribution de ressources, s'il convient d'accepter la demande de connexion d'appel ;
transférer la demande de connexion d'appel à un autre serveur de QoS lorsque la demande de connexion d'appel peut être acceptée ; et
émettre une réponse d'erreur lorsque la demande de connexion d'appel ne peut être acceptée.

9. Procédé de relais de paquet de données IP selon la revendication 6, comprenant en outre les étapes consistant à ce que :
chaque noeud informe le serveur de QoS, lorsqu'un paquet TCP circule dans le second réseau IP, d'informations sur la base desquelles le serveur de QoS déterminé un chemin d'appel, et d'informations qui concernent les ressources disponibles du noeud; et
le serveur de QoS détermine un chemin d'appel et une disponibilité de ressources dans chaque noeud concernant le chemin d'appel, sur la base des information.

10. Passerelle (11, 12) adaptée pour connecter une pluralité de premiers réseaux IP (101, 102) qui prennent en charge des terminaux IP (901, 902) et un second réseau IP (201) qui se situe parmi les premiers réseaux IP (101, 102) et exécute une commande d'appel et une gestion d'appel, la passerelle comprenant (11,12):
une unité de réception adaptée pour recevoir un paquet de demande de session TCP en provenance de l'un des premiers réseaux IP (101, 102) ou un paquet de données initialement transmis ;
une unité d'analyse adaptée pour analyser le paquet reçu ; et
une unité d'établissement adaptée pour établir un appel qui correspond au paquet reçu dans le second réseau IP (201), afin de permettre à un paquet IP en provenance de l'un des premiers réseaux SIP (101, 102) vers un autre des premiers réseaux IP (101, 102), de passer à travers le second réseau IP (201), **caractérisé en ce que** :
la pluralité de premiers réseaux IP n'exécutent pas de commande d'appel ;
la passerelle comprend une première passerelle connectée à l'un des premiers réseaux IP qui reçoit un terminal IP de source, et une seconde passerelle connectée à l'autre des premiers réseaux IP qui reçoit un terminal IP de destination ;
la passerelle établit l'appel dans le second réseau IP simultanément avec l'établissement d'une session TCP entre le terminal IP de source et le terminal IP de destination grâce au fait que :
la première passerelle est configurée pour :
recevoir un paquet de demande de session TCP en provenance du terminal IP de source ;
créer un paquet de demande de connexion d'appel afin d'émettre le paquet de demande de connexion d'appel ; et
transférer le paquet de demande de session TCP reçu ;
la seconde passerelle est configurée pour :
transférer, lors de la réception du paquet de demande de session TCP, le paquet de demande de session TCP vers le terminal SIP de destination tel quel ;
transférer, lors de la réception d'un paquet de réponse de session TCP en provenance du terminal IP de destination, le paquet de réponse de session TCP tel quel ;
émettre, lors de la réception du paquet de demande de connexion d'appel, un paquet de réponse de connexion d'appel vers le terminal IP de source ;
la première passerelle est en outre configurée pour :
recevoir le paquet de réponse de session TCP et le paquet de réponse de connexion d'appel ;
synchroniser le paquet de réponse de session TCP et le paquet de réponse de connexion d'appel ;
transférer le paquet de réponse de session TCP vers le terminal IP de source après avoir réalisé une synchronisation entre le paquet de réponse de session TCP et le paquet de réponse de connexion d'appel ;
dans lequel le terminal IP de source est configuré pour transmettre, lors de la réception du paquet de réponse de session TCP, un paquet TCP-ACK au terminal IP de destination afin d'exécuter, dans la session TCP établie, une communication entre le terminal IP de source et le terminal IP de destination après la transmission du paquet TCP-ACIC, et dans lequel la première passerelle est en outre configurée pour réaliser de manière autonome, en tant qu'expéditeur, une synchronisation entre la demande et la réponse, tout en transférant de manière séparée le paquet de commande d'appel en tant que paquet de demande de connexion d'appel et le paquet d'établissement de session TCP en tant que paquet de demande de session TCP dans le second réseau IP.
